# EUROPEAN PATENT APPLICATION

(11) **EP 1 293 688 A1**
(43) Date of publication of application: **19.03.2003**
(21) Application number: 02256432.2
(22) Date of filing: 13.09.2002
(51) Int. Cl.: F16B 37/12, B01D 29/00

(54) **Helical wire article, method of forming and use for filtering**

(30) Priority: 15.09.2001 GB 0122316
(71) Applicant: Wedge Wire Screens Limited, Toll Bar, Doncaster DN5 0QY (GB)
(72) Inventor: Spiller, Clifford M., c/o Wedge Wire Screens Ltd., Toll Bar, Doncaster DN5 0QY (GB)
(74) Representative: Wood, Graham

(57) **Abstract**

The invention relates to the formation of an article which is wholly formed with a thread formation or includes a portion which is threaded. The threaded portion is formed by winding a wire (4) in a helical path around a series of spaced support members (6). The wire (4) forms the thread and also forms a slot (8) in a helical path between adjacent portions of the wound wire (4). A suitable threaded member (16) can then be introduced to the article and selective rotation causes relative movement of the threaded member (16) along the threaded portion. The article can be used as a filter medium, a securing means and the like and the wire (4) used is typically triangular in cross section and known as wedge wire.

## Description

The invention to which this application relates is an article of the type which includes at least a portion which is threaded and to the manner in which the threaded portion is formed. The invention also relates to uses of the article and the method of manufacture of the article.

The use of threaded articles such as bolts and screws to provide fastening devices is well known and it is also well known to provide a screw thread which allows for the progression of an article along the threaded portion. However, in each case the thread formation is machined into the outer surface of a solid, elongate, cylindrical member with the thread formation effectively a ridge which passes along and around the elongate member in a helical path.

It is also known to provide filter screens for the separation of solids material from liquids in which the same are carried and said screens can be manufactured from a series of wires or rods commonly triangular in cross section and known as wedge wire which are spaced apart to form slots between adjacent wires or alternatively by forming a single wire or rod into a particular form with adjacent portions spaced and separated by a slot. Such screens are typically arranged to be in the form of panels against which liquid containing solids are introduced with the liquid passing through the slots and the separated solids held on the panel for subsequent removal.

The aim of the present invention is to provide a method of forming wire to provide a threaded portion on an article and to provide said article with a wide range of uses which are advantageous and inventive.

In a first aspect of the invention there is provided an article having a threaded portion characterised in that the threaded portion is formed from wire formed in a helical path with a slot formed between adjacent portions of the wire, said helical formation of wire engageable with a threaded member to allow selective movement between the article and threaded member.

In one embodiment the whole article is formed by the threaded portion.

In one embodiment the article can be developed and used as a screening media to separate solids from a solids containing liquid which is introduced onto the surface of the threaded portion of the article, said liquid passing through the slot formed and the solids retained on the surface. In this arrangement if wedge wire is used the wider face of the wedge wire is positioned toward the external surface of the article and is first contacted by the material to be filtered. In this arrangement the width of the slot between portions of wire tapers outwardly towards the internal cavity in the article.

Typically the threaded member is provided for engagement with the article to act as a cleaning means to remove that solid matter from the article surface which has not passed through the slot or aperture. Preferably one of the article or member is driven to move along the other to allow the threaded member to pass along the threaded portion of the article.

In one embodiment an internal cavity is defined by the threaded portion and said cavity can be used as a housing for a further article.

Typically the slot formed by the helical winding of the wire is continuous along the threaded portion and follows the helical path of the wire.

In one embodiment the at least one threaded member acts as a securing means for the article with the article driven into the threaded member with the threaded member secured in position. In an alternative arrangement the article is used as a securing means to receive a threaded member with the threaded member engaging with the wire and, as it is turned, moving along the wire and into the article to perform a securing function.

Most preferably the wire which is used to form the article is wedge wire which, in cross section, has a substantially triangular shape and is attached at intervals to support members to provide location therefor.

In a further aspect of the invention there is provided a method of forming an article with a threaded portion formed from wire, said method comprising placing a series of elongate members at spaced intervals around a circumference of a required size, winding a wire around the members in a helical path and attaching the wire to the members at intervals so as to form the threaded portion of the article with a slot defined between each adjacent portion of the wire.

In one embodiment the support members can be replaced by a solid bar, tube or cylinder.

In a further aspect of the invention there is provided a method of filtering solid matter from a solids containing liquid using an article as defined in claim 1, said method comprising introducing the liquid onto the threaded portion of the article, said liquid passing through the slot in the article and the solids material trapped on the wire and/or blocking the slot and characterised in that a threaded member is engaged on the threaded portion of the article and relative rotational movement of the member and article causes movement of the threaded member along the threaded portion to clear solid matter from the threaded portion.

In one embodiment the threaded member or threaded portion is provided with cleaning means which pass into the slot to improve the removal of the solids material therefrom.

Specific embodiments of the invention are now described with reference to the accompanying drawings; wherein
Figures 1A-C illustrate a threaded article in accordance with one embodiment of the invention;
Figure 2 illustrates an end elevation of the article according to Figure 1A-C;
Figure 3 illustrates an end elevation of an alternative embodiment of the article;
Figure 4A illustrates one use of an article in accordance with the invention;
Figure 4B illustrates a cross section on line BB of the threaded member of Figure 4A;
Figure 4C illustrates a detailed view of part of the threaded member with part of the article from Figures 4A and B;
Figure 5 illustrates a further embodiment of an article in accordance with the invention.

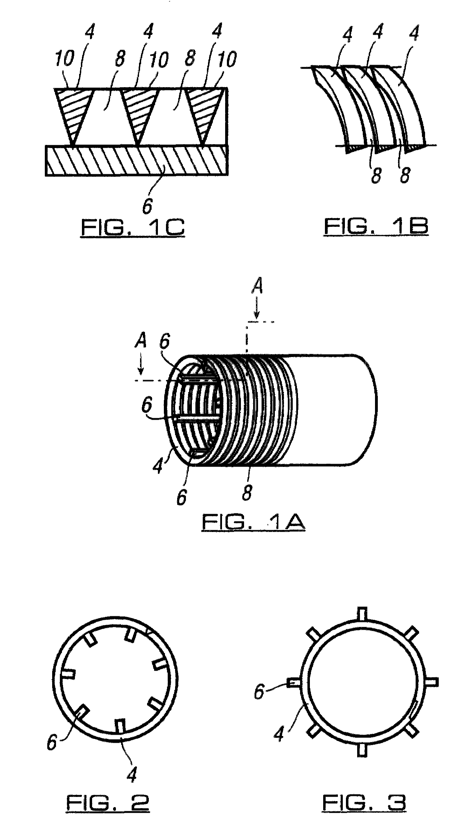

Referring firstly to Figures 1A-C there is illustrated an article 2 in accordance with the invention. The article comprises a wire 4 which is wound around a series of elongate members 6 in a helical path as shown. The wire is wound, spaced and attached to the elongate members such that a continuous helical slot or aperture 8 is formed along the length of the threaded portion. The slot 8 is formed between adjacent portions of the wire 4 as shown in detail in figure 1B which illustrates in detail part of the threaded portion of the article of Figure 1A.

Figure 1C illustrates a section along line A-A of Figure 1A which illustrates the arrangement between the support member 6 and the successive portions of the wire 4 joined to the support member at spaced intervals to provide the slot 8. The figure also illustrates the wedge shape cross section of the wire 4.

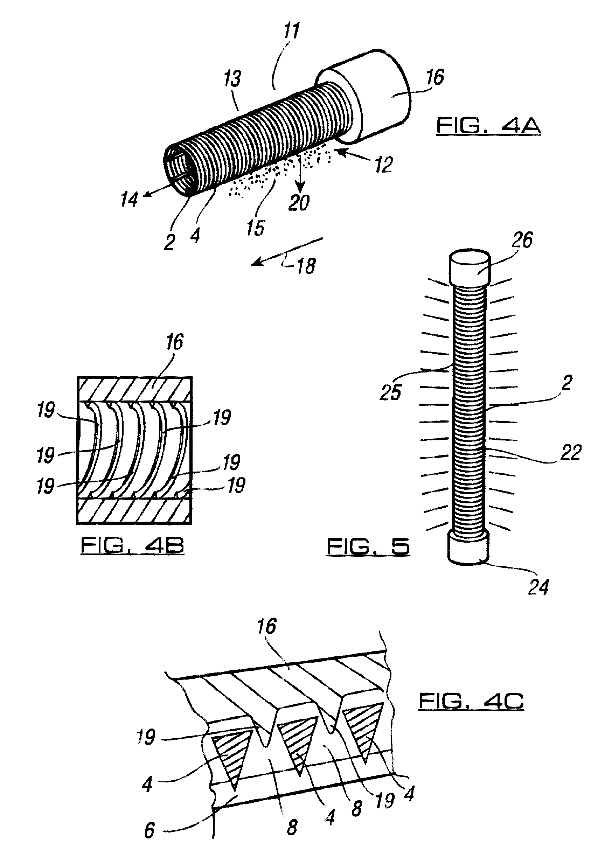

The wire which is preferably used is known as wedge wire and two embodiments of construction are shown in Figures 2 and 3. The wedge wire 4 in cross section has a triangular shape as shown in Figure 1C and the broadest face 10, if the wedge wire is to be used as a filter medium, faces the flow of the liquid containing solids from which the solid material is to be separated.

Figure 2 illustrates a first arrangement where the elongate members are spaced around a circumference as shown and the length of wedge wire is wound around the outside of the said members in a helical path to form a thread portion and is connected to the support members at spaced intervals, typically by welding.

Figure 3 shows an alternative arrangement where the wedge 4 wire is wound around the inside of the circumference defined by the spaced elongate members 6.

In which ever format the combination of the wire and the slot forms a helical thread along at least a portion of the article and indeed the article as formed is, in effect, a helical thread, so that there is disclosed in a first aspect of the invention an article with at least a portion which is formed by a length of wedge wire wound and retained in a helical path to form a thread and with a slot formed between adjacent portions of the wire along the length of the thread.

Figure 4A-C illustrate a first possible use of the article in accordance with the invention wherein there is shown an article 11 with a wedge wire 4 formed threaded portion 13 including a slot 8 between adjacent portions of the wedge wire. The article is a screening media and is positioned in the flow path of a liquid containing solids which is flowing as indicated by arrow 12. The article acts as a screening filter such that the liquid from the flow 12 passes through the slot 8 defined between the wedge wire 4 and then is directed along the inner cavity of the article as indicated by arrow 14 to exit. The solid matter 15 is retained on the outer surface 17 of the article as it does not pass through the slot. A threaded member 16 is provided in engagement on the threaded portion formed by the wire 4. The threaded member 16 is provided to be rotated either manually or by powered drive, and as it does, it moves along the threaded portion 13 formed by the wire 4 and hence moves along the article as indicated by arrow 18. As it turns so the thread protrusion 19 indicated in Figure 4B on the threaded member engages with the slot 8 of the article and acts to remove solid matter from the slot 8 and cause the same to be deposited for collection as indicated by arrow 20. Figure 4C illustrates the manner in which the thread protrusion 19 engages with the slot 8 of the threaded portion of the article to allow the threaded member to follow the thread along the article and also act as a cleaning means. The threaded member can therefore be used as a slot cleaning means and moved successively or intermittently along the threaded portion of the article to clean solid matter therefrom.

Another use of the current invention is illustrated in Figure 5 in which the article 2 is used as a housing for a light fitting with a lighting tube 22 mounted within the inner cavity defined by the threaded portion 25. In this embodiment the article is to be held in a vertical plane and a first threaded member 24 is provided at the base with which the article can be placed in engagement by engaging the threaded member with the thread of the wire of the portion 25 and then turning the article to screw the same into engagement. At the opposing end a further threaded member 26 is provided and rotation of the member with respect to the article provides the required engagement to enclose the lighting tube 22 within the threaded portion. The light is emitted from the lighting tube through the slot defined between adjacent portions of the wire of the threaded portion 25. It will thus be appreciated that the engagement of the article with the threaded member fittings is relatively straightforward and greatly simplified as the securing means are provided as part of the article which is to be secured in position.

The fixing of the article at the floor and/or ceiling can be achieved by using the principle of screw-jack securing means.

Thus it should be appreciated that the present invention provides an efficient, cost effective method of forming an article with a threaded portion in which a length of wire in a helical path is used to form the thread and define a slot therebetween.

In one use the threaded article can be used as a securing means, in another form as a decorative fitting, or as a screening media, and can be used, if required, with further members threadedly attached thereto

## Claims

1. An article having a threaded portion **characterised in that** the threaded portion is formed from wire formed in a helical path with a slot formed between adjacent portions of the wire, said helical formation of wire engageable with a threaded member to allow selective movement between the article and threaded member.

2. An article according to claim 1 **characterised in that** the wire is formed round and joined to a series of support members which run along the length of the threaded portion.

3. An article according to claim 2 wherein the support members are provided internally of the wire threaded portion.

4. An article according to claim 2 **characterised in that** the support members are provided externally of the wire threaded portion.

5. An article according to claim 1 **characterised in that** the article is a screening media to separate solids from a solids containing liquid which is introduced onto the surface of the threaded portion of the article said liquid passing through the slot formed and the solids retained on the surface.

6. An article according to claim 5 **characterised in that** the threaded member is provided for engagement with the article to act as a cleaning means to remove that solid matter from the article surface which has not passed through the slot or aperture.

7. An article according to claim 6 **characterised in that** one of the article or member is driven to move along the other to allow the threaded member to pass along the threaded portion of the article.

8. An article according to claim 1 **characterised in that** the at least one threaded member acts as a securing means for the article with the article driven into the threaded member with the threaded member secured in position.

9. An article according to claim 8 **characterised in that** the article is used as a securing means to receive a threaded member with the threaded member engaging with the wire and, as it is turned, moving along the wire and into the article to perform a securing function.

10. An article according to claim 1 **characterised in that** the wire which is used to form the article is wedge wire which, in cross section, has a substantially triangular shape.

11. An article according to claim 10 **characterised in that** the wedge wire is attached at intervals to support members to provide location therefor.

12. A method of forming an article with a threaded portion formed from wire said method comprising placing a series of elongate members at spaced intervals around a circumference of a required size, winding a wire around the members in a helical path and attaching the wire to the members at intervals so as to form the threaded portion of the article with a slot defined between each adjacent portion of the wire.

13. A method according to claim 12 wherein the threaded article is formed by winding a wire around a solid bar, tube or cylinder.

14. A method of filtering solid matter from a solid containing liquid using an article as defined in claim 1, said method comprising introducing the liquid onto the threaded portion of the article, said liquid passing through the slot in the article and any solid material trapped on the wire and/or blocking the slot and **characterised in that** a threaded member is engaged on the threaded portion of the article and relative rotational movement of the member and article causes movement of the threaded member along the threaded portion to clear solid matter from the threaded portion.

15. A method according to claim 14 **characterised in that** the threaded member is provided with cleaning means which pass into the slot to improve the removal of the solids material therefrom.
